# NEW EUROPEAN PATENT SPECIFICATION

(11) **EP 0 484 893 B2**
(45) Date of publication and mention of the opposition decision: **27.06.2001**
(45) Mention of the grant of the patent: 27.08.1997
(21) Application number: 91118889.4
(22) Date of filing: 06.11.1991
(51) Int. Cl.: C08J 9/32, C08J 9/16

(54) **A method of producing hollow fine particles**
Verfahren zur Herstellung von hohlen feinen Teilchen
Procédé de fabrication de particules fines creuses

(30) Priority: 09.11.1990 JP 30500690
(43) Date of publication of application: 13.05.1992
(73) Proprietor: MATSUMOTO YUSHI-SEIYAKU CO., LTD., Yao-City, Osaka (JP)
(72) Inventor: Tanaka, Koji, Kashiwara-City, Osaka (JP); Kitano, Kenichi, Osaka-City, Osaka (JP); Kida, Sueo, Kashihara-City, Nara (JP)
(74) Representative: Leifert, Elmar, Dr.

(56) References cited:
- EP-A- 0 056 219
- FR-A- 2 093 741
- JP-A- 62 201 231
- JP-A- 62 286 534
- US-A- 3 615 972
- US-A- 3 914 360
- US-A- 4 686 244
- Encyclopedia of Chemical Technology, vol. 14, pages 254-255
- Technical Bulletin n° 17, Expancel in Vinyl Foam

## Description

### BACKGROUND OF THE INVENTION

The present invention relates to a method for producing hollow fine particles.

A number of patents and patent applications including USP 3,611,583 have been made for a method of blowing thermally expandable microsphere containing a volatile liquid blowing agent in an outer shell made of a thermoplastic resin.

However, in the conventional methods, hollow fine particles are fused among themselves in a blowing process to form agglomerated particles and thus it is difficult not only to dry them but also to uniformly disperse them in paints, sealing agents, plastics, or rubber.

Although a method of pulverizing dried particles by means of a pulverizer, such as Henschel mixer and hammer mill, has been also proposed, it is not easy to pulverize expanded agglomerated fine particles; the pulverized particles are greatly uneven in size; and a structure of said hollow fine particles is destructed to spoil the characteristics of the hollow fine particles.

Although a method of simultaneously conducting the expansion and the drying of microspheres by spraying thermally expandable microspheres in a heated air has been disclosed in Japanese Patent Publication No. Sho 59-53290, a large-sized apparatus for collecting expanded hollow fine particles from air is required, which is a problem in the aspect of industrial practicability.

A method has been disclosed in Japanese Patent Application Laid-Open No. Sho 62-201231, in which expandable microspheres are blown in an aqueous slurry, and the resulting slurry of blown hollow products is passed through gaps of a grindstone to disperse aggregates. Apart from the case where an aqueous slurry is used, also this method includes a problem that the obtained hollow particles are fused in the drying process, when they are dried before mixed with plastics, paints, rubber, sealants and the like.

FR-A-2 093 741 discloses a process for producing expanded microspheres made from synthetic resins wherein an exposed layer of microspheres is deposited on a mobile surface, the microspheres being obtained from a dispersion in a liquid which does not dissolve the synthetic resin and which contains a flocculant for the microspheres, then transporting the exposed layer into a heated zone, heating the mobile surface to a temperature and for a time sufficient to dry and expand the microspheres and then contacting a gas with the microspheres and recollecting the dried and expanded microspheres from the surface.

US-A-4,686,244 discloses thermoplastic microspheres filled with a volatile liquid. The thermoplastic microspheres comprise a polyorganosiloxane composition.

### SUMMARY OF THE INVENTION

The present invention provides a method for producing hollow fine particles as defined in claim 1

The obtained hollow fine particles are not agglomerated so that they can be easily and homogeneously compounded with plastics, coatings, rubber, or sealant.

### BRIEF DESCRIPTION OF THE DRAWINGS

Fig. 1 is a rough drawing showing an apparatus for producing hollow fine particles; and
Fig. 2 is a rough drawing showing a structure of a blowing machine.

### DETAILED DESCRIPTION OF THE INVENTION

In order to obtain said hollow fine particles, thermally expandable microspheres containing a volatile liquid blowing agent in an outer shell made of a thermoplastic resin are heated in a specific said liquid organic compound which does not dissolve them.

Said thermally expandable microspheres themselves may be those known, as disclosed in for example Japanese Patent Publication No. Sho 42-26524. Said volatile liquid blowing agent contained in the thermally expandable microspheres may be blowing agents having a boiling point of - 50 °C to 150 °C, preferably - 15 °C to 100 °C, for example, hydrocarbons having 4 to 8 carbon atoms such as butane, propane, i-butane, n-pentane, i-pentane and neo-pentane; and halogenated hydrocarbons such as trichlorofluoromethane, petroleum ether, hexane and heptane.

Said thermoplastic resin forming said outer shell of the thermally expandable microspheres includes a homo- or co-polymer obtained from monomers having an ethylenically saturated bond, such as vinylidene chloride, acrylonitrile, methacrylonitrile, acrylic acid ester, methacrylic acid ester, maleic acid ester, vinyl acetate, vinyl chloride, acrylic acid, methacrylic acid, itaconic acid, maleic acid, acrylic acid amide, methacrylic acid amide, styrene, vinyl toluene and vinyl pyridine, but the thermoplastic resin superior in expandability in the liquid organic compound is preferably a homo- or co-polymer of vinylidene choride, acrylonitrile, methacrylonitrile, acrylic acid ester, methacrylic acid ester, or vinyl acetate. A copolymer of vinylidene chloride and acrylonitrile (50:50 to 80:20), and a copolymer of acrylonitrile and methyl methacrylate (50:50 to 90:10) are particularly preferable.

In these copolymers, polymerizable monomers having at least two unsaturated bonds, in particular radical polymerizable monomers, such as divinyl benzene, butadiene, ethylene glycol dimethacrylate, triacryl formal and trimethylol propane triacrylate, may be used preferably together with the aforementioned monomers having an ethylenically unsaturated bond. Said monomers having at least two unsaturated bonds are used preferably in a quantity of 0.05 to 5 parts by weight, more preferably 0.1 to 2 parts by weight based on 100 parts by weight of the monomers having an ethylenically unsaturated bond. The use of the monomers having at least two unsaturated bonds leads to the improvement of resistance of the obtained thermally expandable microspheres to said liquid organic compound; wet microspheres with the dry touch; suppression of solubility to the liquid organic compound and of oozing of the volatile blowing agent contained, and thus effective achievement of the thermal expansion. In addition, the wet hollow fine particles are not swollen or dissolved during the storage.

Although the liquid organic compound according to the present invention may be suitably selected depending upon properties, and object of the hollow fine particles to be obtained, they should have the following properties basically. That is to say, (1) it has a boiling point higher than that of the volatile liquid blowing agent and (2) it does not dissolve or swell the thermoplastic resin forming the outer shell of the thermally expandable microspheres. As to the property (2), a partial joint use of the monomers having at least two unsaturated bonds improves the thermoplastic resin in a resistance to solvents, so that the selectivity was remarkably broadened. In order to meet the property (1) and avoid an evaporation during the storage, the liquid organi compound should have a boiling point of 80 °C or more preferably 100 to 250 °C.

The liquid organic compound includes various kind of substances, such as plasticizers, for example dibuty phthalate, diisooctyl phthalate, dioctyl adipate, tricresyl phosphate, triethyl citrate and octyl alcohol, when the obtained hollow fine particle composition is used for plastics, elastomers, sealants, or paints; monomers for resin used for molded products or adhesives, for example dicyclopentadiene and styrene, when lightweight foam molded products or adhesives are to be obtained; and nonionic surfactants, alkylene glycol, glycerine, silicone oil, fluid paraffin, oils and fats depending upon the objects. These liquid organic compounds may be used in combination.

The liquid organic compound is used in a quantity of 100 to 20,000 parts by weight, preferably 500 to 10,000 parts by weight, based on 100 parts by weight of the thermally expandable microspheres. This quantity is selected depending upon a size, kind, wet degree, and object of the hollow fine particles. After an excess of liquid organic compound is used to obtain the hollow fine particles, a liquid may be removed by e.g. a centrifugal separator, or a suction filter. In the case where the hollow fine particles are obtained in the plasticizer, the both are added to the plastics as they are, and used without removing the liquid.

In the method of producing the hollow fine particle composition according to the present invention, thermally expandable microspheres produced by the known method or commercially available are dispersed in a specific amount of a given liquid organic compound. When the thermally expandable microspheres are dispersed in the liquid organic compound, all of the given amount of liquid organic compound may be used, but it is preferable that the thermally expandable microspheres are dispersed in a part of the excess amount of liquid organic compound; the resulting dispersion is mixed with a part of the rest liquid organic compound heated to the blowing temperature or higher; and then a temperature of the dispersion is raised to a given blowing temperature; followed by adding the rest of the liquid organic compound when the thermally expandable microspheres are expanded to a given magnifications to lower temperature of the dispersion to the blowing temperature or less and subsequently an excess of liquid organic compound is removed. Such the method is in particular preferable in view of energy efficiency, temperature control and uniformity of qualities of products (in particular particle diameter) in order to continuously produce a large amount of hollow fine particle composition.

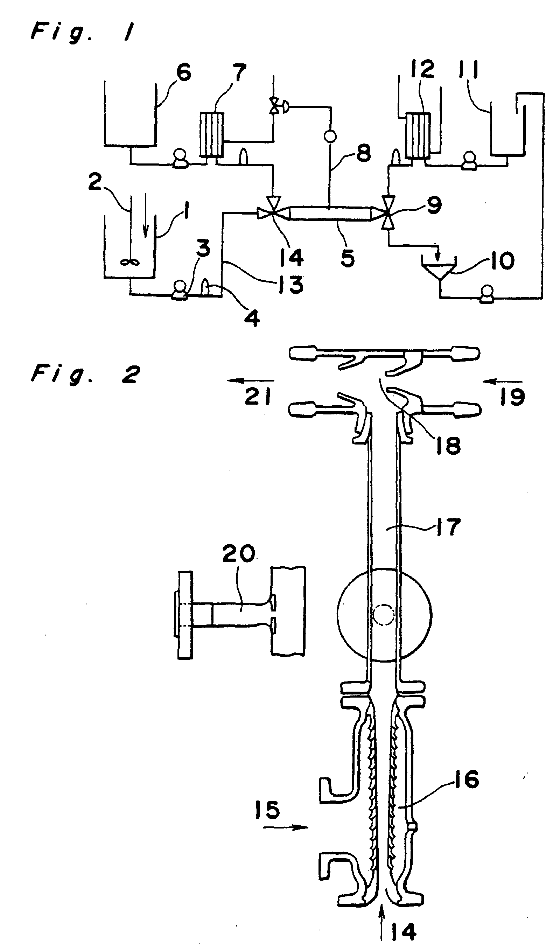

One embodiment of a particularly preferable apparatus for producing the hollow fine particle composition obtained according to the method of the present invention and the method of producing the hollow fine particle composition using the same will be below described with reference to Fig. 1. The thermally expandable microspheres and the liquid organic compound in the amount sufficient for making a slurry are charged in a slurry tank (1), and dispersed by means of a stirrer (2). The stirring is continued until the microspheres are not settled in the liquid organic compound and the sufficient dispersion is maintained. Said temperature of the system may be controlled at room temperature or lower than the blowing temperature. The dispersion is sent to a blowing machine (5) through a pump (3) with regulating a flow rate by means of a flow meter (4).

Separately, the liquid organic compound is sent from a tank (6) to a heat exchanger (7) where it is heated to a temperature considerably higher than a temperature necessary for the expansion of the thermally expandable microspheres and a given amount of the heated liquid organic compound is sent to said blowing machine (5). An inside of the blowing machine (5) is adapted to speedily and uniformly mix the dispersion with the heated liquid organic compound.

Fig. 2 shows an example of the blowing machine (5). The thermally expandable microsphere dispersion (14) and the heated liquid organic compound (15) are mixed and heated in an inline heater (16) to be introduced into a blowing portion (17), and at an exit of said blowing portion (17) the heated mixture of the thermally expandable microsphere dispersion (14) and the liquid organic compound (15) is mixed with a cooling liquid organic compound (19) to be cooled.

Referring to Fig. 2, reference number (20) designates a thermometer seat and reference number (21) designates an exit of the blowing dispersed product. The expandable microsphere dispersion and the heated liquid organic compound are mixed within the blowing machine to be maintained at the given blowing temperature. The heated liquid organic compound may be used in multiple-stages, if necessary, and the temperature may be held constant or gradually risen or lowered. The introduction of the heated liquid organic compound in multiple-stages is useful also for regulating a change of the dispersion in fluidity due to the thermal expansion of the microspheres. The resulting slurry containing the hollowfine particles is mixed with said cool liquid organic compound at a sending-out portion (9) to be cooled to a blowing temperature or less, for example 80 to 30°C. The hollow fine particles are collected on a filter (10) from the slurry, and an excess of the liquid organic compound may be collected in a tank (11). This liquid organic compound may be used repeatedly as cooled by a heat exchanger or as collected in the tank (1) or (6) without cooling.

The hollow fine particle composition obtained according to the present invention can be added to plastics and elastomers to obtain lightweight plastics and elastomers or added to paints and inks to be used for controlling the coating properties, the appearance of coatings and the printing properties. Alternatively, it may be added to sealants, putties, adhesives and the like to regulate a filling-up property, an elasticity, a shock-resistance and the like. Or, it may be also adhered to a surface of cloth for a cushion, artificial leathers and the like.

When the hollow fine particle composition obtained according to the present invention is used in plastics and elastomers, monomers, raw materials of said plastics, may be used to polymerize said monomers in the presence of the hollow fine particles. The present invention is illustrated by the following Examples.

### EXAMPLE 1

A dispersion of dioctyl phthalate (DOP) containing thermally expandable Matsumoto microspheres F-50 (the outer shell resin: acrylonitrile-methyl methacrylate; the particle diameter: 10 to 20 µm; made by Matsumoto Yushi Seiyaku KK) in the amount of 15% by weight was prepared.

This dispersion was treated in the apparatus as shown in Fig. 1 to obtain a hollow fine particle composition. The dispersion was passed through the blowing pipe (5) (a diameter of 36 mm and a length of 600 mm and made of SUS 304 TP) from the slurry-introducing pipe (13) at a flow rate of 4 ℓ/min. Separately, DOP in the tank (6) was heated to about 150 °C by the heat exchanger (7) and supplied to the introducing portion (14) of the heat exchanger (5) at a flow rate of 12ℓ/min to be mixed with the slurry. At this time, the temperature within the blowing pipe was set at 120 °C. DOP of a room temperature was introduced into the blown slurry flown out from the sending-out portion (9) of the blowing pipe at a flow rate of 25 ℓ/min to cool the slurry to temperatures of 60 °C or less and then the liquid was removed from the slurry by the suction dehydrator (10) to obtain wet hollow fine particles containing DOP in the amount of 86 % and having a particle diameter of 50 to 100 µm. These were handy wet powders without generating dusts and agglomerated particles.

### EXAMPLE 2

The operation was carried out in the same manner as in EXAMPLE 1 excepting that thermally expandable microspheres Matsumoto microspheres F-30 (the outer shell resin: vinylidene chloride-acrylonitrile copolymer; the particle diameter: 10 to 20 µm; made by Matsumoto Yushi Seiyaku KK) were used and isopropyl mirystate (IPM) was used in place of DOP to obtain wet powders containing IPM in the amount of 83 % and having a particle diameter of 50 to 100 µm.

### EXAMPLE 3

The heating, the expansion and the cooling were carried out in the same manner as in EXAMPLE 1 excepting that the general multitubular heat exchanger was used in place of the blowing machine according to EXAMPLE 1 and the thermally expandable microspheres contained in DOP in the amount of 1.5 % by weight. Wet hollow fine particles containing DOP in the amount of 85% by weight and having a particle diameter of 40 to 80 µm were obtained.

### EXAMPLE 4

The DOP slurry containing the thermally expandable microspheres Matsumoto microsphere F-30 in the amount of 14 % was supplied on a steel belt in a thickness of about 2 mm. This steel belt was passed through a heating zone (3 m) of 150 °C and a cooling zone (2 m) of 10 °C at a speed of 1 m/min. Wetted hollow fine particles containing DOP in the amount of 89% and havinga particle diameter of 40 to 90 µm were continuously obtained without removing the liquid.

## Claims

1. A method of producing hollow fine particles which comprises dispersing thermally expandable microspheres containing a volatile liquid blowing agent in a liquid organic compound which has a boiling point higher than the expansion temperature of said microspheres and does not dissolve the microspheres to obtain a slurry in an amount of 100 to 20000 parts by weight per 100 parts by weight of hollow fine particles, and then heating said slurry to a temperature higher than the blowing temperature of the thermally expandable particles by adding the liquid organic compound heated, so as to expand the thermally expandable particles.

2. A method of producing hollow fine particles of the claim 1, in which the liquid organic compound has a boiling point of at least 80 °C.

3. A method of producing hollow fine particles of the claim 1, in which the liquid organic compound is a plasticizer selected from the group consisting of dibutyl phthalate, diisooctyl phthalate, dioctyl adipate, tricresyl phosphate, triethyl citrate and octyl alcohol.

4. A method of producing hollow fine particles of the claim 1, in which the thermally expandable microspheres have a shell of a thermoplastic resin prepared from the polymerization of one or more kinds of monomers having an ethylenically unsaturated bond selected from the group consisting of vinylidene chloride, acrylonitrile, methacrylonitrile, acrylic acid ester, methacrylic acid ester, maleic acid ester, vinyl acetate, vinyl chloride, acrylic acid, methacrylic acid, itaconic acid, maleic acid, acrylic acid amide, methacrylic acid amide, styrene, vinyl toluene or vinyl pyridine.

5. A method of producing hollow fine particles of claim 4, in which the thermoplastic resin is additionally polymerized with one or more kinds of radically polymerizable monomers having at least two unsaturated bonds in a quantity of 0.05 to 5 parts by weight based on 100 parts by weight of the monomers having an ethylenically unsaturated bond.

6. A method of producing hollow fine particles of the claims 1 to 5, in which the slurry is heated to higher temperature than the blowing temperature of the thermally expandable particles by adding a part of the liquid organic compound heated so as to expand the thermally expandable particles, and then the rest of the liquid organic compound of low temperature is added to decrease the slurry temperature to lower than the blowing temperature of the thermally expandable particles.

## Patentansprüche

1. Verfahren zur Herstellung hohler Feinpartikel, welches umfaßt: Dispergieren thermisch expandierbarer Mikrosphären enthaltend ein flüchtiges, flüssiges Treibmittel in einer flüssigen organischen Verbindung, welche eine Siedetemperatur hat, die höher ist als die Expansionstemperatur der Mikrosphären, und die die Mikrosphären nicht löst, zur Herstellung einer Aufschlämmung in einer Menge von 100 - 20.000 Gewichtsteilen pro 100 Gewichtsteilen der hohlen Feinpartikel, und anschließendes Erhitzen der Aufschlämmung auf eine Temperatur, die höher ist als die Aufblastemperatur der thermisch expandierbaren Partikel, durch Zugabe der erhitzten flüssigen organischen Verbindung zur Expansion der thermisch expandierbaren Partikel.

2. Verfahren zur Herstellung hohler Feinpartikel nach Anspruch 1, wobei die flüssige organische Verbindung einen Siedepunkt von mindestens 80°C aufweist.

3. Verfahren zur Herstellung hohler Feinpartikel nach Anspruch 1, wobei die flüssige organische Verbindung ein Weichmacher ist, der ausgewählt wird aus der aus Dibutylphthalat, Diisooctylphthalat, Dioctyladipat, Tricresylphosphat, Triethylcitrat und Octylalkohol bestehenden Gruppe.

4. Verfahren zur Herstellung hohler Feinpartikel nach Anspruch 1, wobei die thermisch expandierbaren Mikrosphären eine Schale aus einem thermoplastischen Harz aufweisen, das hergestellt wird durch Polymerisation einer oder mehrerer Arten von Monomeren mit einer ethylenisch ungesättigten Bindung, die ausgewählt werden aus der aus Vinylidenchlorid, Acrylnitril, Methacrylnitril, Acrylsäureester, Methacrylsäureester, Maleinsäureester, Vinylacetat, Vinylchlorid, Acrylsäure, Methacrylsäure, Itaconsäure, Maleinsäure, Acrylsäureamid, Methacrylsäureamid, Styrol, Vinyltoluol oder Vinylpyridin bestehenden Gruppe.

5. Verfahren zur Herstellung hohler Feinpartikel nach Anspruch 4, wobei das thermoplastische Harz zusätzlich polymerisiert wird mit einer oder mehreren Arten radikalisch polymerisierbarer Monomere mit mindestens zwei ungesättigten Bindungen in einer Menge von 0,05 bis 5 Gewichtsteilen bezogen auf 100 Gewichtsteile der Monomere mit einer ethylenisch ungesättigten Bindung.

6. Verfahren zur Herstellung hohler Feinpartikel nach Ansprüchen 1 bis 5, wobei die Aufschlämmung durch Zugabe eines Teils der erhitzten flüssigen organischen Verbindung zur Expansion der thermisch expandierbaren Partikel auf eine höhere Temperatur als die Blastemperatur der thermisch expandierbaren Partikel erhitzt wird und anschließend der Rest der flüssigen organischen Verbindung bei niedriger Temperatur zur Absenkung der Aufschlämmungstemperatur auf eine niedrigere Temperatur als die Aufblastemperatur der thermisch expandierbaren Partikel zugegeben wird.

## Revendications

1. Procédé de fabrication de fines particules creuses, qui comprend la dispersion de microsphères thermiquement expansibles contenant un agent d'expansion liquide volatil dans un composé organique liquide qui a un point d'ébullition supérieur à la température d'expansion desdites microsphères et ne dissout pas les microsphères afin d'obtenir une bouillie, dans une quantité de 100 à 20 000 parties en poids pour 100 parties en poids de fines particules creuses, puis le chauffage de ladite bouillie à une température supérieure à la température d'expansion des particules thermiquement expansibles par addition du composé organique liquide chauffé, de façon à expanser les particules thermiquement expansibles.

2. Procédé de fabrication de fines particules creuses, selon la revendication 1, dans lequel le composé organique liquide a un point d'ébullition d'au moins 80°C.

3. Procédé de fabrication de fines particules creuses, selon la revendication 1, dans lequel le composé organique liquide est un plastifiant choisi dans le groupe constitué par le phtalate de dibutyle, le phtalate de diisooctyle, l'adipate de dioctyle, le phosphate de tricrésyle, le citrate de triéthyle et-l'alcool octylique.

4. Procédé de fabrication de fines particules creuses, selon la revendication 1, dans lequel les microsphères thermiquement expansibles ont une enveloppe d'une résine thermoplastique préparée par la polymérisation d'une ou plusieurs sortes de monomères ayant une liaison d'insaturation éthylénique, choisis dans le groupe constitué par le chlorure de vinylidène, l'acrylonitrile, le méthacrylonitrile, les esters de l'acide acrylique, les esters de l'acide méthacrylique, les esters de l'acide maléique, l'acétate de vinyle, le chlorure de vinyle, l'acide acrylique, l'acide méthacrylique, l'acide itaconique, l'acide maléique, l'amide d'acide acrylique, l'amide d'acide méthacrylique, le styrène, le vinyl toluène ou la vinyl pyridine.

5. Procédé de fabrication de fines particules creuses, selon la revendication 4, dans lequel la résine thermoplastique est polymérisée additionnellement avec une ou plusieurs sortes de monomères polymérisables par voie radicalaire, ayant au moins deux liaisons d'insaturation dans une quantité de 0,05 à 5 parties en poids sur la base de 100 parties en poids des monomères ayant une liaison d'insaturation éthylénique.

6. Procédé de fabrication de fines particules creuses, selon l'une des revendications 1 à 5, dans lequel la bouillie est chauffée à une température supérieure à la température d'expansion des particules thermiquement expansibles par addition d'une partie du composé organique liquide chauffée de façon à expanser les particules thermiquement expansibles, puis le reste du composé organique liquide à basse température est ajouté pour diminuer la température de la bouillie à une valeur inférieure à la température d'expansion des particules thermiquement expansibles.
